# EUROPÄISCHE PATENTANMELDUNG

(11) **EP 2 364 829 A1**
(43) Veröffentlichungstag der Anmeldung: **14.09.2011**
(21) Anmeldenummer: 10002409.0
(22) Anmeldetag: 09.03.2010
(51) Int. Cl.: B27N 3/18, B65G 47/248

(54) **Plattenkühlvorrichtung und Plattenkühlverfahren, insbesondere für den Einsatz mit einer Doppelbandanlage oder KT-Presse**

(71) Anmelder: Siempelkamp Maschinen- und Anlagenbau GmbH & Co.KG, 47803 Krefeld (DE)
(72) Erfinder: Behling, Wolfgang, 82499 Wallgau (DE)
(74) Vertreter: Szynka, Dirk

(57) **Zusammenfassung**

Die Erfindung betrifft eine Kühlvorrichtung mit einer Transportkette 4 und von dieser abstehenden Armen 8 zum Halten von Platten 9 entlang eines geraden oberen Trums, wobei ein Kippvorgang der Platten 9 in den Anfangsbereich des geraden Trums verlegt ist.

## Beschreibung

Die vorliegende Erfindung bezieht sich auf das Gebiet der Herstellung von Platten für die Bau-, Möbel- und Innenausstattungsindustrie. Insbesondere geht es dabei um die Kühlung von Platten, die wegen eines vorangegangenen Prozessschritts Wärme und oft zusätzlich auch Feuchtigkeit und andere Dämpfe abgeben sollen.

In diesem Zusammenhang sind maschinelle Kühlvorrichtungen bekannt, die zwischen zwei Kettenrädern gehaltene, gespannte und angetriebene Transportketten aufweisen. Bekannt ist ferner, dass diese Transportketten nach außen, also insbesondere im Bereich des oberen Trums nach oben, abstehende Anlagearme für die Platten aufweisen, um diese ungefähr aufrecht zu halten. Dabei wird hier und im Folgenden der Begriff "Arm" auf eine Blickrichtung in Achsrichtung der Kettenräder bezogen, weil es auf diese Projektionsebene (oder Schnittfläche) letztlich ankommt. Entsprechende Arme können dann in axialer Richtung mehrfach hintereinander gestaffelt sein oder in der axialen Richtung rahmenähnlich verbaut sein oder im Prinzip (wenngleich aus Gründen des Materialverbrauchs und der Trägheit ungünstig) auch durchgehende Platten sein. Üblich sind hier in axialer Richtung hintereinander wiederholte gleichartige Armstrukturen, sodass man sich eine vollständige Transportkette stachelbewehrt vorstellen kann. Dementsprechend wird hier umgangssprachlich auch von einem "Kühligel" gesprochen.

Einem solchen Kühligel werden die zu kühlenden Platten über eine Einlaufbahn, etwa eine Rollenbahn, horizontal liegend zugeführt und von den Anlagearmen aufgenommen und während des Transports um etwa einen Viertelkreis des einlaufseitigen Kettenrades aufgerichtet. Die Platten bleiben in der ungefähr aufgerichteten Position bis zum auslaufseitigen Kettenrad und werden dann auf einer Auslauftransportbahn abgelegt. Die für den Transportweg von der Aufnahme bis zur Ablage benötigte Zeit bildet die Kühlzeit und die aufrechte Lage der Platten während des Transports soll für eine entsprechende Wärme- und Dampfabgabe sorgen.

Von diesem Stand der Technik ausgehend liegt der Erfindung die Aufgabe zugrunde, eine Kühlvorrichtung und ein entsprechendes Kühlverfahren sowie ferner eine die Kühlvorrichtung umfassende Produktionsanlage und eine darauf gerichtete Verwendung der Kühlvorrichtung anzugeben, die im Hinblick auf die Behandlung der Platten und die maschinellen Leistungsdaten vorteilhaft sind.

Hierzu richtet sich die Erfindung auf eine Kühlvorrichtung für Platten mit einer Transportkette, zwei Kettenrädern, zwischen denen die Transportkette mit einem oberen Trum und einem unteren Trum gehalten ist, Traggeschirren an der Transportkette, die zum Halten der Platten während ihres Transports auf dem oberen Trum ausgelegt sind und, in Blickrichtung parallel zu einer Achsrichtung der Kettenräder, immer jeweils einen langen Arm aufweisen, der sich bei einer Position des Traggeschirrs auf dem oberen Trum von der Transportkette weg nach oben erstreckt und gegen den sich eine transportierte Platte anlehnen kann, wobei die Kühlvorrichtung dazu ausgelegt ist, die Platten jeweils aus einer liegenden Einlaufposition mit einem langen Arm eines Traggeschirrs während des Transports über einen Teilkreis des einlaufseitigen Kettenrades aufzurichten und über eine vertikal aufgerichtete Orientierung hinaus überkippen zu lassen, sodass die Platte in einem oberen Bereich an dem langen Arm eines Traggeschirrs vor dem Traggeschirr des aufrichtenden langen Arms zur Anlage kommen.

Sie richtet sich ferner auf ein Kühlverfahren nach Anspruch 14, eine die Kühlvorrichtung umfassende Produktionsanlage nach Anspruch 13 und die Verwendung der Kühlvorrichtung in diesem Sinn nach Anspruch 15. Bevorzugte Ausgestaltungen sind in den abhängigen Ansprüchen angegeben und werden im Folgenden zusammen mit den Grundideen der Erfindung näher erläutert, wobei die einzelnen Merkmale grundsätzlich für alle Kategorien maßgeblich sind und auch in anderen Kombinationen erfindungswesentlich sein können.

Der Erfindung liegt folgende Idee zugrunde: Die Platten sind insbesondere während des Kühlprozesses erfahrungsgemäß empfindlich. Im Stand der Technik wurden die Platten in der beschriebenen Weise transportiert, wobei sie von den Anlagearmen, die hier zur Unterscheidung von weiteren Armen als "lange Arme" bezeichnet werden, aufgenommen und während des Transports entlang des oberen Trums gehalten. Auf dem angenäherten Viertelteilkreis-Transport an dem auslaufseitigen Kettenrad kippten die Platten dann vornüber und fielen wegen der dort auf dem Umfang des Kettenrades gegebenen Aufspreizung der langen Arme über einen erheblichen Weg auf die langen Arme des jeweils vorangehenden vorderen Traggeschirrs. Dies trägt nicht zur Oberflächenqualität der Platten bei und birgt das Risiko von Schäden.

Die Erfindung sieht daher vor, das Überkippen bereits in den Anfangsbereich des oberen Trums zu verlegen, also die langen Arme und die Bewegungskinematik der Transportkette so auszurichten, dass die Platten bereits gegen Ende der Bewegung auf einem Teilkreis des einlaufseitigen Kettenrades, im Übergang zu dem oberen Trum oder am Anfang des selben so umkippen, dass sie im oberen Bereich gegen den langen Arm des vorausgehenden Traggeschirrs anliegen. Hierbei kann mit oberem Bereich der obere Bereich des langen Arms gemeint sein, insbesondere wenn dieser kürzer als die Plattenhöhe ist, oder der obere Bereich der Platte, insbesondere wenn diese umgekehrt kürzer als der lange Arm ist. Grundsätzlich sind die langen Arme hinsichtlich dieser Begrifflichkeit nicht auf eine bestimmte Länge festgelegt, sondern sollen lediglich im Verhältnis zu den Abständen zwischen den langen Armen in Richtung des oberen Trums (also in horizontaler Transportrichtung) länger sein. Der Vorteil dieses erfindungsgemäßen Merkmals liegt darin, dass dieses Überkippen über einen sehr kleinen Winkelbereich erfolgen kann, weil die langen Arme nicht oder nur wenig aufgespreizt sind. Die Platten fallen zudem jedenfalls nicht durch eine Abwärtswölbung der Kettenrichtung bedingt steil abwärts sondern kippen eher in der Umgebung einer aufrechten Position bzw. aus einer noch nach hinten geneigten Position gerade über diese aufrechte Position hinüber. Sie werden also vergleichsweise weniger durch die Schwerkraft beschleunigt.

Die liegende Einlaufposition bedeutet übrigens nicht zwingend eine genau horizontale Lage, genauso wenig wie die aufrechte Position der langen Arme im oberen Trum, also das Sichnachobenerstrecken, eine genau vertikale Orientierung bedeutet. Die Begriffe sind nur näherungsweise zu verstehen.

Vorzugsweise wird dieses Überkippen so gestaltet, dass die Platten jeweils nur mit ihrer oberen Kante und nicht oder nur geringfügig mit ihrer unteren Kante bewegt werden, wobei die untere Kante in einem deutlichen Abstand von dem langen Arm des vorderen Traggeschirrs bleibt, an dem die selbe Platte oben anliegt. Damit sind die großen Flächen der Platte fast ganz von den langen Armen beabstandet und die Kontaktflächen mit dem Traggeschirr werden minimiert. Dies verbessert die Möglichkeiten zur Wärme- und Dampfabführung und verringert die Gefahr von sichtbaren Oberflächenbeeinträchtigungen durch großflächiges Anliegen von Traggeschirrteilen, insbesondere Armen.

Das erfindungsgemäße Überkippen kann im Prinzip in verschiedener Weise erfolgen, beispielsweise durch den Schwung, den die Platten bei ihrer Aufwärtsbewegung entlang dem durch das einlaufseitige Kettenrad vorgegebene Teilkreis erfahren. Vorzugsweise ist die erfindungsgemäße Kühlvorrichtung aber so ausgelegt, dass sich die langen Arme entlang eines horizontal laufenden Bereichs des oberen Trums etwas nach vorne neigen und damit das Überkippen erzwingen.

Eine weitere Ausgestaltung der Erfindung sieht einen direkten, d. h. insbesondere rampenfreien Übergang zwischen den Kettenrädern und dem oberen Trum vor. Durch das erfindungsgemäße Überkippen bereits am Anfang des Transportweges kann nämlich darauf verzichtet werden, den Umkippvorgang am Ende des Transportwegs durch eine ganz allmähliche rampengeführte Abwärtsbewegung der Transportkette vor dem Auflaufen auf das eigentliche auslaufseitige Kettenrad zur Milderung der beschriebenen Probleme vorzusehen. Neben dem zusätzlichen Bauaufwand hätten solche Rampen auch den Nachteil, dass sie das obere Trum gegenüber dem unteren etwas verlängern (wenn man dort nicht ebenfalls Rampen vorsehen will) und damit einen Gleichtaktbetrieb stören. Bevorzugt ist nämlich, dass die Kühlvorrichtung beim Einlaufen und Auslaufen von Platten jeweils Bewegungspausen einlegt, die synchron sind. In einer Bewegungspause wird also sowohl eine Platte übernommen als auch abgegeben. Dies setzt bei der bevorzugten ungefähr horizontalen Orientierung der Platten beim Einlauf und Auslauf eine Symmetrie zwischen oberem und unterem Trum voraus, weil geeignete Rampen jedenfalls nicht soviel zusätzliche Trumlänge erzeugen, dass dies gewissermaßen einem ganzen Traggeschirr entspricht.

Zudem ist die Übergabe zwischen der Kühlvorrichtung und den Transporteinrichtungen am Einlauf und Auslauf, vorzugsweise Rollenbahnen, günstigerweise direkt. Es wird also vorzugsweise auf Hilfseinrichtungen verzichtet, die beispielsweise die Platten von einer Rollenbahn in eine angewinkelte Position verkippen oder anheben oder in ähnlicher Weise den Übergabevorgang moderieren. Das gilt gleichermaßen für den Auslauf.

Ferner ist bei einer weiteren Ausgestaltung der Erfindung pro aufzunehmender Platte genau ein langer Arm vorgesehen, was die erwähnte axiale Blickrichtung betrifft. Es können also in axialer Folge mehrere lange Arme vorhanden sein, die hier nur als ein Arm gezählt werden. Jedoch soll hinsichtlich der Transportrichtung pro Platte nicht mehr als ein Arm verwendet werden. Dementsprechend soll es auch pro Arm genau ein Traggeschirr geben. Es kann also auf die Möglichkeit verzichtet werden, die Platten in U-förmigen oder anderweitig taschenähnlichen Konstruktionen zu halten, bei denen also pro Platte zwei Arme, einer vor und einer hinter ihr, zur Verfügung stehen. Damit lassen sich der Bauaufwand, Materialverbrauch und das Gewicht der Vorrichtung erheblich reduzieren.

Die Traggeschirre können weitere Arme zum Halten der Platten aufweisen, wobei im Folgenden zur Unterscheidung von den langen Armen von Anschlagarmen gesprochen wird. Hierbei geht es um ganz ungefähr quer zu den langen Armen verlaufende und vergleichsweise kürzere Arme (im allgemeinen Sinn von Anschlägen), die in der Umgebung der Transportkette vorgesehen sind und zum Aufsitzen der Platten während ihres oder auch nach ihrem Transport auf dem oberen Trum der Transportkette dienen. Nach einer bevorzugten Ausgestaltung ist pro Traggeschirr ein solcher Anschlagarm, der im Folgenden als erster Anschlagarm bezeichnet wird, auf der jeweiligen Rückseite des langen Arms (aber deswegen nicht notwendigerweise an dem selben) angeordnet. Die Kühlvorrichtung ist so ausgelegt, dass die Platten (zumindest) nach dem Überkippen auf diesem Arm zum Aufsitzen kommen. Das Aufsitzen muss dabei nicht mit dem Überkippen erfolgen, wie die Ausführungsbeispiele zeigen, vielmehr können die Platten im Laufe des oder nach dem Überkippen von einer anderen Hebeeinrichtung auf den ersten Anschlagarm übergeben werden. Grundsätzlich ist das Aufbringen auf einen Anschlagarm, insbesondere dem beschriebenen rückseitigen, vorzugsweise mit einem hebenden Aufsetzen verbunden, und zwar vorzugsweise im Rahmen der gekrümmten Bewegungen bei den Kettenrädern. Insbesondere können die Platten schon bei dem ersten einlaufseitigen Kettenrad in diesem Sinn insbesondere auf den ersten Anschlagarm aufgesetzt werden. Durch die rückseitige Anordnung gehört der erste Anschlagarm dann zu dem vorderen Traggeschirr, an dem die Platte im oberen Bereich anliegt, sodass bei dieser Ausgestaltung die Platte dann vollständig vom dem vorderen Traggeschirr übernommen wird.

Ferner ist bei besonderen Ausgestaltungen, vorzugsweise, aber nicht notwendigerweise in Kombination mit dem ersten Anschlagarm, ein im Folgenden als zweiter Anschlagarm bezeichneter kettennaher Arm an den Traggeschirren vorgesehen, und zwar jeweils an der Vorderseite des langen Arms. Dieser Arm ist zum Halten und Aufsitzen der Platten (zumindest) vor dem Überkippen ausgelegt. Insbesondere kann der zweite Anschlagarm die Platten auf dem bereits beschriebenen ersten Anschlagarm während des Überkippens, danach (oder auch kurz davor) ganz oder teilweise übergeben, es sind aber auch Ausführungsformen möglich, bei denen der zweite Anschlagarm die Platten während des gesamten Transports über das obere Trum trägt und gar kein erster Anschlagarm vorgesehen ist oder ein erster Anschlagarm die Platten erst im Bereich des auslaufseitigen Kettenrades übernimmt.

Bevorzugt ist jedoch eine Kombination der beiden Anschlagarme in näherungsweise T-Form, wobei der lange Arm durch die beiden Anschlagarme als jeweilige kurze Schenkel zum T ergänzt wird und der vordere, also zweite Anschlagarm relativ zu dem langen Arm unter das Niveau des rückseitigen, also ersten Anschlagarms abtaucht und damit die Platte übergibt. Für die Begrifflichkeiten "Anschlagarm", "Abtauchen" und "Niveau" gilt hier natürlich wieder die axiale Blickrichtung. Die Anschlagarme können tatsächlich, dreidimensional betrachtet, axial wiederholte Ansätze sein, axial durchgehende Leisten sein oder eine Stachelform, wie bereits weiter oben für die langen Arme erwähnt, haben.

Weitere Ausgestaltungen der Erfindung, insbesondere solche ohne zweiten Anschlagarm, weisen als Halteeinrichtung für die Platten während des Umlaufs des Traggeschirrs über einen Teilkreis des einlaufseitigen Kettenrades eine koaxial zu dem Kettenrad laufende Scheibe mit entsprechend geformtem Umgang auf, die hier als Nockenscheibe bezeichnet wird. Diese Nockenscheibe soll zwar keine Stößel bewegen, gegenüber denen sie sich dreht, übernimmt aber eine Anschlagfunktion mit ihrem Außenumfang, indem sich die Platten darauf abstützen können, während sie um das Kettenrad umlaufen. Die Nockenscheibe übergibt die Platten dann auf eine andere, Halteeinrichtung, insbesondere den erwähnten ersten Anschlagarm, indem sie im Bereich des Übergangs zum geraden oberen Trum unter den Platten und Traggeschirren wegtaucht.

Je nach Aufbau der Traggeschirre kann die Nockenscheibe sehr unterschiedliche geometrische Formen haben. Besonders vorteilhaft sind Nockenscheiben, die radial innerhalb der axial durchlaufenden Teile der Traggeschirre bleiben, wozu auf die Ausführungsbeispiele verwiesen wird.

Die Erfindung bezieht sich besonders auf Kühlvorrichtungen für Sandwichelemente. Solche Sandwichelemente haben Füllungen, insbesondere aus PUR/PIR-Material oder Mineralwolle, und Deckschichten. Die Deckschichten sind vorzugsweise Bleche, Metallfolien oder Holzwerkstoffplatten. Die Sandwichelemente können nach ihrer Herstellung wegen eines vorangegangenen Temperaturschrittes, etwa zur Reaktion von PUR/PIR-Füllungen oder Klebstoffschichten, Kühlbedarf haben. Gleichermaßen sind aber auch Beschichtungen von Holzwerkstoffplatten, etwa für Möbelfronten, in Betracht zu ziehen. Besonders eignet sich die erfindungsgemäße Kühlvorrichtung für die Kombination mit einer Doppelbandanlage zur Herstellung der Sandwichelemente, aber auch für das Kühlen von Produkten einer Kurztaktbeschichtungspresse (sog. KT-Anlage). Dementsprechend richtet sich die Erfindung auch auf eine Produktionsanlage, die zur Herstellung solcher Platten ausgelegt ist und eine Kühlvorrichtung des beschriebenen Typs enthält.

Daneben richtet sich die Erfindung auf ein Verfahren zum Herstellen der Platten, bei dem die Kühlvorrichtung eingesetzt wird, und auf die Verwendung der Kühlvorrichtung für die Produktionsanlage und das Verfahren.

Im Folgenden wird die Erfindung anhand von Ausführungsbeispielen näher erläutert, wobei auch weiterhin die einzelnen Merkmale für alle Kategorien und auch in anderen als den dargestellten Kombinationen erfindungswesentlich sein können.
- Figur 1: zeigt eine schematisierte Gesamtdarstellung einer erfindungsgemäßen Kühlvorrichtung mit axialer Blickrichtung.

- Figur 2: zeigt eine vereinfachte Prinzipdarstellung der Kühlvorrichtung aus Figur 1.
- Figur 3: zeigt eine Figur 2 entsprechende vereinfachte Darstellung eines zweiten Ausführungsbeispiels.
- Figur 4: zeigt eine den Figuren 2 und 3 entsprechende vereinfachte Darstellung als drittes Ausführungsbeispiel.

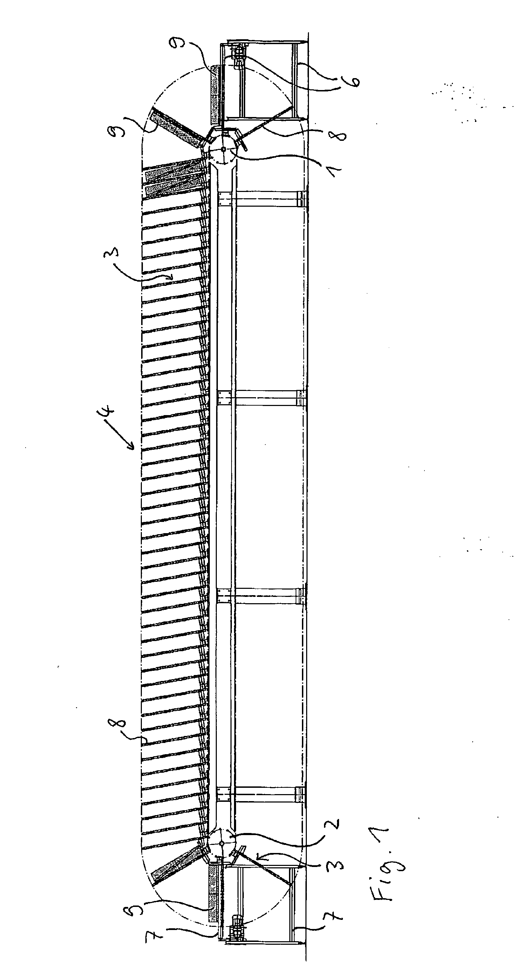

In Figur 1 ist insgesamt eine erfindungsgemäße Kühlvorrichtung dargestellt, wobei mit 1 und 2 Kettenräder bezeichnet sind, zwischen denen eine Gliederkette aufgespannt ist, die hier mit Traggeschirren 3 als Transportkette 4 dient. Dabei ist nur das obere horizontale Trum der Transportkette 4 nebst den um die Kettenräder 1 und 2 umlaufenden Teilen gezeichnet. Das untere Trum muss man sich horizontal hinzudenken.

Das in Figur 1 rechte Kettenrad 1 ist durch eine nicht dargestellte Spanneinrichtung horizontal verschiebbar, um die Transportkette 4 zu spannen. Ferner erkennt man rechts von dem rechten Kettenrad 1 eine Rollenbahn 6 als einlaufseitige Anlieferungseinrichtung und links von dem linken Kettenrad 2 eine weitere Rollenbahn 7 als auslaufseitige Abtransporteinrichtung. Das linke Kettenrad 2 ist in nicht dargestellter Weise motorisch angetrieben.

Figur 1 zeigt ferner, dass hier das Traggeschirr 3 in der axialen Blickrichtung jeweils einen langen Arm 8 aufweist, wobei die langen Arme der Traggeschirre 3 im oberen Trum nach oben mit leichter Neigung nach links hoch stehen und im Bereich der Rollenbahnen 6 und 7 genau auf deren Niveau horizontal liegen, weswegen die Rollenbahn 6 etwas höher liegt als die Rollenbahn 7. Der Neigungswinkel der langen Arme 8 im Bereich des geraden Trums gegenüber der Vertikalen beträgt circa 10°.

Man erkennt in Figur 1 ferner, dass die langen Arme 8 rechts in Figur 1 eingezeichnete Platten 9 von der Rollenbahn 6 abheben, wenn sich die Transportkette 4 gegen den Uhrzeigersinn dreht, diese Platten 9 über das obere Trum von rechts nach links transportiert werden und links auf die Rollenbahn 7 abgelegt werden. Hierzu weisen die Rollenbahnen 6 und 7 zu den langen Armen 8 passende Schlitze auf. Die langen Arme 8 sind in der axialen Richtung (senkrecht zur Zeichenebene) mehrfach ausgeführt und greifen zwischen die Rollen der Rollenbahnen 6 und 7.

In an sich bekannter Weise dient der Transport der Platten 9 über die Kühlvorrichtung zur Kühlung und gegebenenfalls auch zum Abdampfen.

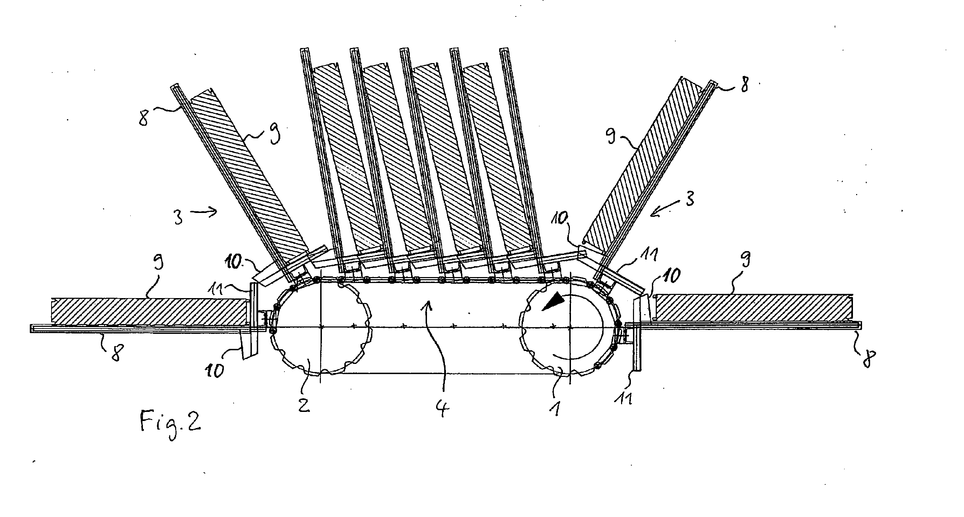

Figur 2 ist gegenüber Figur 1 durch Schematisierung der Kettenräder 1 und 2, Verkürzung der Gesamtkettenlänge und Weglassen aller weiteren Elemente außer der (verkürzten) Transportkette 4 mit den Traggeschirren 3 sowie den Platten 9 vereinfacht. Figur 2 zeigt, dass die Platten 9 in ihrer Aufwärtsbewegung von der sich nach rechts erstreckenden horizontalen Lage in die links darüber eingezeichnete Schräglage auf einen bezüglich der Traggeschirre 3 vorderen ("zweiten") Anschlagarm 10 rutschen und mit ihrer in der Figur 2 rechten unteren Kante auf dem Anschlagarm 10 aufsetzen.

Man erkennt in Figur 2 gut, dass dieser zweite Anschlagarm 10 auf der hinsichtlich der Transportrichtung gegenüberliegenden Seite des langen Arms 8 jeweils durch einen ersten Anschlagarm 11 ergänzt ist, der in Bezug auf die Längsrichtung des langen Arms 8 ungefähr auf gleicher Höhe mit dem unteren Bereich des zweiten Anschlagarms 10 liegt, mit seiner Oberseite aber etwas tiefer, und insgesamt mit dem langen Arm und dem zweiten Anschlagarm 10 eine T-Form bildet. Man kann auch erkennen, dass die von rechts gezählt dritte Platte in Figur 2 mit ihrer unteren linken Kante bereits auf dem ersten Anschlagarm 11 des aus der Sicht der Platte vorderen Traggeschirrs aufsitzt, während die untere rechte Kante der Platte 9 noch von dem zweiten Anschlagarm 10 des hinteren Traggeschirrs 3 gestützt wird. Der zweite Anschlagarm 10 hat die Platte 9 gewissermaßen im Zug des Überkippens der Platte 9 auf den ersten Anschlagarm 11 aufgehoben. Die in Figur 2 von links gezählt zweite Platte, die sich bereits mit ihrem Traggeschirr 3 in die Bewegung entlang eines Teilkreises um das Kettenrad 2 begeben hat, hat sich endgültig von dem zweiten Anschlagarm 10 des hinteren Traggeschirrs 3 gelöst und sitzt vollständig auf dem ersten Anschlagarm 11 auf. Dabei ist die Platte übrigens im Unterschied zu ihrer Transportlage über das obere gerade Trum auch in ihrem unteren Bereich nach vorne gerutscht und liegt ganz an dem langen Arm 8 des relativ zu ihr vorderen Traggeschirrs 3 an. In dieser Form kann sie weiter entlang dem Teilkreis um das Kettenrad 2 verschwenkt und wie in Figur 1 gezeigt auf die auslaufseitige Rollenbahn 7 abgelegt werden.

Man erkennt, dass insgesamt eine Übergabe von dem Anschlagarm 10 auf den Anschlagarm 11 erfolgt, wobei es nicht wesentlich ist, ob diese Übergabe ganz oder teilweise eher am Anfang oder eher am Ende des geraden Trums stattfindet. Wenn beispielsweise die ersten Anschlagarme 11 etwas höher oder die Anschlagarme 10 mit ihrer Oberkante etwas niedriger montiert wären, könnte schon am Anfang des oberen Trums, also im Übergang von der Situation der von rechts gezählt zweiten zur dritten Platte in Figur 2, eine vollständige Übergabe auf den entsprechenden Anschlagarm 11 stattfinden. Umgekehrt wäre es auch ohne weiteres möglich, die Platten 9 entlang des Transports über das obere Trum bis einschließlich zu der Situation der von rechts gezählt dritten Platte vollständig auf dem jeweiligen Anschlagarm 10 ruhen zu lassen und erst danach die Übergabe zu dem Anschlagarm 11 zu vollziehen.

Wichtiger ist, dass die langen Arme 8 mit den Platten 9 über dem Kettenrad 1 erst sehr kurz vor dem Übergang in das gerade Trum über eine vertikale Orientierung hinausgeschwenkt werden, sodass der lange Arm 8 des vorangehenden Traggeschirrs 3 relativ dazu nicht mehr aufgespreizt ist (wie dies auf den Umlaufbahnen um die Kettenräder 1, 2 der Fall ist). Dadurch kippen die Platten 9 über einen relativ kleinen Winkel und stoßen nur sanft an die vorauslaufenden langen Arme 8 an. Wichtig ist ferner, dass ihre unteren Bereiche dabei nicht oder kaum verrückt werden und, wie die mittleren vier Platten 9 in Figur 2 zeigen, über die gerade Transportstrecke an den vorangehenden und rückseitigen langen Armen 8 jeweils nur wenig anliegen. Dadurch ist für eine maximale Luftzirkulation und Kühlung gesorgt. Die kleine Schwenkbewegung zur vollständigen Anlage an den vorderen langen Armen 8 über dem Kettenrad 2 erfolgt ebenfalls in der Nähe einer vertikalen Orientierung und damit relativ sanft.

Der gesamte Aufbau ist erkennbar symmetrisch, man könnte sich also in Figur 2 weitere 6 Traggeschirre 3 im unteren Bereich vorstellen, sodass die jeweiligen Bewegungspausen der Transportkette 4 für den Einlauf angelieferter und für den Auslauf abzutransportierender Platten 9 identisch sind. Dementsprechend verläuft die Transportkette zwischen den Kettenrädern 1 und 2 gerade und ist relativ leicht abzustützen. Ferner können die Platten direkt von horizontal verlaufenden Rollenbahnen übergeben oder abgeholt werden. Schließlich ist bei diesem Ausführungsbeispiel die lichte Weite oder in anderen Worten der Abstand der Traggeschirre 3 relativ kurz, sodass sich bei einer bestimmten Gesamtlänge der Vorrichtung relativ viele Platten kühlen lassen. Dies ist möglich, weil sich die Traggeschirre 3 beim Einlauf und Auslauf durch die Krümmung der Umfänge der Kettenräder 1 und 2 weit öffnen.

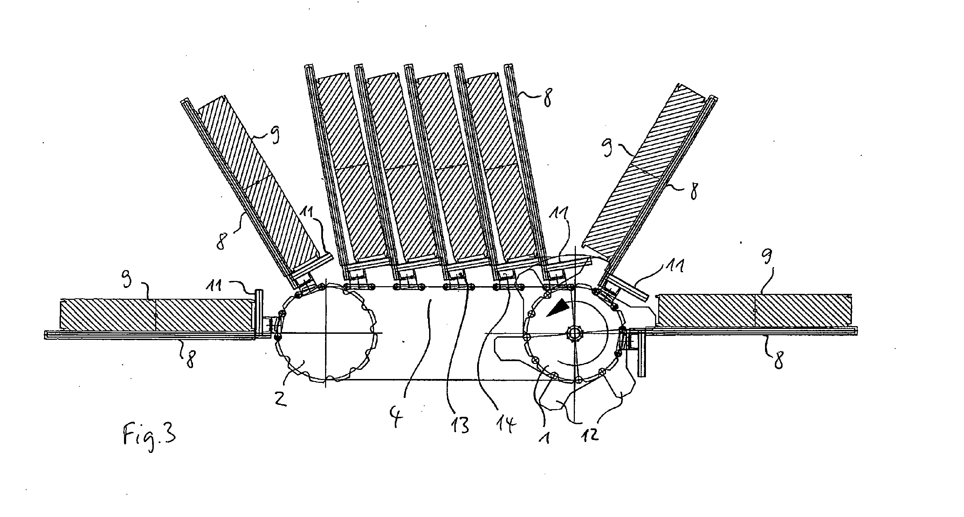

Figur 3 zeigt ein zweites Ausführungsbeispiel, das hinsichtlich übereinstimmender Bestandteile mit Figur 1 und 2 nicht näher erläutert wird und insoweit die gleichen Bezugzeichen trägt. Bei diesem zweiten Ausführungsbeispiel fehlen die zweiten Anschlagarme 10; statt dessen ist koaxial zu dem Kettenrad 1 eine Nockenscheibe 12 vorgesehen, die funktionsangepasste sägezahnähnliche (aber etwas verrundete) Nockenvorsprünge an ihrem Umfang trägt. Man erkennt in der Figur direkt, dass die Platten 9 während ihrer Bewegung entlang dem Teilkreis, den das Kettenrad 1 vorgibt, auf der Außenseite eines solchen Nockenvorsprungs aufliegt, und zwar mit der selben rechten unteren Kante, mit der sie bei dem Ausführungsbeispiel aus Figur 2 auf dem zweiten Anschlagarm 10 aufgesessen sind. Dementsprechend erfolgt eine Übergabe über dem Kettenrad 1 auf identisch zu Figur 2 aufgebaute erste Anschlagarme 11. Im Übrigen gelten die Erläuterungen zu Figur 2.

Bei diesem zweiten Ausführungsbeispiel lassen sich natürlich die Anschlagarme 10 einsparen, was bei größeren Kühlvorrichtungen durchaus eine erhebliche Material-, Gewichts- und Kostenersparnis bedeutet. Allerdings ist genau darauf zu achten, dass die Nockenvorsprünge der Nockenscheibe 12 nicht mit den Traggeschirren 3 kollidieren. Insbesondere weisen die Traggeschirre 3 neben den bereits erläuterten Armen 8, 10, 11 in Figur 2 bzw. 8 und 11 in Figur 3 axial durchgehende U-Träger 13 auf, die über entsprechende schräge Montageblöcke 14 mit den Kettengliedern verbunden sind. Die Montageblöcke 14 sind natürlich nur der Zahl der Kettenglieder in axialer Richtung entsprechend vorgesehen. Für die Arme gilt, wie bereits mehrfach erläutert, dass sie in axialer Richtung stachelartig gehäuft vorgesehen sein können und hier sind. Auch die Nockenscheiben 12 sind in axialer Richtung wiederholt. Um einen mechanischen Zusammenhalt zu gewährleisten, müssen die U-Träger 13 jedoch axial durchlaufen und diese axial gestaffelten Baugruppen verbinden. Daher können die Nockenvorsprünge der Nockenscheiben 12 nicht zwischen den U-Trägern 13 hindurch geführt werden.

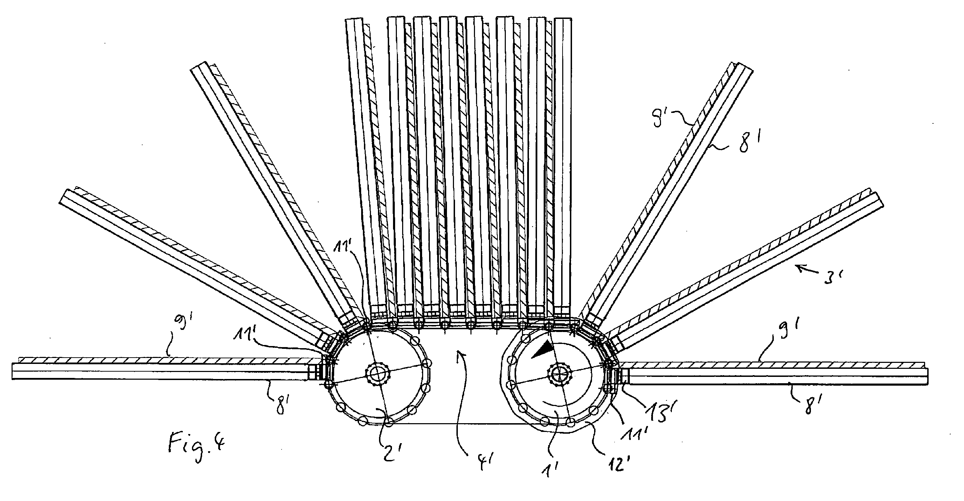

Figur 4 zeigt eine diesbezüglich abgewandelte dritte Ausführungsform. Wegen der etwas anderen Gestalt (mit einem Neigungswinkel von nur etwa 2°) sind die mit den Figuren 1, 2 und 3 prinzipiell übereinstimmenden Bauteile mit den gleichen Bezugsziffern, jedoch mit einem Strich dahinter, versehen. Insbesondere die Nockenscheibe 12' weist eine abweichende Form auf und ist eher als abgerundetes Polygon gestaltet. Dies bedeutet konkret, dass es sich radial innerhalb der axial durchlaufenden Vierkantträger 13' und das außerhalb des ersten Anschlagarms 11' hält. Damit entfallen die gerade erwähnten geometrischen Kollisionsmöglichkeiten. Ferner sind hier die langen Arme 8' erheblich massiver ausgeführt als in den Figuren 1, 2 und 3, gleichzeitig aber vergleichsweise dichter gestaffelt. Diese Ausführungsform ist von besonderem Interesse bei in radialer Richtung großformatigen. Platten, die relativ große Hebelkräfte und damit stabile lange Arme 8' erfordern. Dementsprechend geringer sind die Abstände zwischen den langen Armen 8', sodass bei dem dritten Ausführungsbeispiel in Figur 4 vergleichsweise dünneren Platten transportiert werden. Auch die Anschlagarme 11' sind entsprechend kürzer. Im Übrigen gelten die Erläuterungen zum zweiten Ausführungsbeispiel.

## Patentansprüche

1. Kühlvorrichtung für Platten (9, 9') mit
einer Transportkette (4, 4'),
zwei Kettenrädern (1, 2, 1', 2'), zwischen denen die Transportkette (4, 4') mit einem oberen Trum und einem unteren Trum gehalten ist,
Traggeschirren (3, 3') an der Transportkette (4, 4'), die zum Halten der Platten (9, 9') während ihres Transports auf dem oberen Trum ausgelegt sind und, in Blickrichtung parallel zu einer Achsrichtung der Kettenräder (1, 2, 1', 2'), immer jeweils einen langen Arm (8, 8') aufweisen, der sich bei einer Position des Traggeschirrs (3, 3') auf dem oberen Trum von der Transportkette (4, 4') weg nach oben erstreckt und gegen den sich eine transportierte Platte (9, 9') anlehnen kann,
wobei die Kühlvorrichtung dazu ausgelegt ist, die Platten (9, 9') jeweils aus einer liegenden Einlaufposition mit einem langen Arm (8, 8') eines Traggeschirrs (3, 3') während des Transports über einen Teilkreis des einlaufseitigen Kettenrades (1,1') aufzurichten und über eine vertikal aufgerichtete Orientierung hinaus überkippen zu lassen, sodass die Platte (9, 9') in einem oberen Bereich an dem langen Arm (8, 8') eines Traggeschirrs (3, 3') vor dem Traggeschirr (3, 3') das aufrichtenden langen Arms (8, 8') zur Anlage kommen.

2. Kühlvorrichtung nach Anspruch 1, die so ausgelegt ist, dass ein unterer Bereich der Platten (9, 9') nach dem Umkippen von dem langen (8, 8') Arm des vorderen Traggeschirrs (3, 3') beabstandet bleibt.

3. Kühlvorrichtung nach Anspruch 1 oder 2, bei der sich die langen Arme (8, 8') der Traggeschirre (3, 3') auf dem oberen Trum nach vorn neigen und dadurch das Überkippen unterstützen.

4. Kühlvorrichtung nach einem der vorstehenden Ansprüche mit einem direkten Übergang von dem einlaufseitigen Kettenrad (1, 1') auf das obere Trum, einem geraden oberen Trum und einem direkten Übergang von dem oberen Trum auf das auslaufseitige Kettenrad (2, 2').

5. Kühlvorrichtung nach einem der vorstehenden Ansprüche mit einer einlaufseitigen Einlauftransportbahn (6) und einer auslaufseitigen Auslauftransportbahn (7), wobei die Kühlvorrichtung so ausgelegt ist, dass die Platten (9, 9') zwischen der Einlauftransportbahn (6) und einem langen Arm (8, 8') eines Traggeschirrs (3, 3') einerseits und andererseits zwischen einem langen Arm (8, 8') und der Auslauftransportbahn (7) jeweils direkt übergeben werden können.

6. Kühlvorrichtung nach einem der vorstehenden Ansprüche, die, in einer Blickrichtung parallel zu einer Achsrichtung der Kettenräder (1, 2, 1', 2'), pro Traggeschirr (3, 3') und pro zu transportierender Platte (9, 9') genau einen langen Arm (8, 8') aufweist.

7. Kühlvorrichtung nach einem der vorstehenden Ansprüche, bei der die Traggeschirre (3, 3') jeweils einen kettenseitigen Anschlagarm (10, 10', 11, 11') auf weisen, auf dem die Platten (9, 9') während ihres Transports auf dem oberen Trum aufsitzen können, insbesondere durch ein Aufsetzen beim Aufrichten der Platten (9, 9').

8. Kühlvorrichtung nach einem der vorstehenden Ansprüche, bei der die Traggeschirre (3, 3'), in einer Blickrichtung parallel zu einer Achsrichtung eines Kettenrades (1, 2, 1', 2'), jeweils einen ersten kettenseitigen Anschlagarm (11, 11') auf, in Bezug zu der Transportrichtung der Kette, der Rückseite des jeweiligen langen Arms (8, 8') aufweisen, auf welchem Anschlagarm (11, 11') die Platten (9, 9') nach dem Überkippen aufsitzen können.

9. Kühlvorrichtung nach einem der vorstehenden Ansprüche, bei der die Traggeschirre (3), in einer Blickrichtung parallel zu einer Achsrichtung eines Kettenrades (1, 2), jeweils einen zweiten kettenseitigen Anschlagarm (10) auf, in Bezug zu der Transportrichtung der Kette, der Vorderseite des jeweiligen langen Arms (8) aufweisen, auf welchem Anschlagarm (10) die Platten (9) vor dem Überkippen aufsitzen können.

10. Kühlvorrichtung nach Anspruch 8 und 9, bei der der erste (11) und der zweite (10) Anschlagarm und der lange Arm (8) angenähert eine T-Form bilden, wobei die Kühlvorrichtung dazu ausgelegt ist, dass der erste Anschlagarm (11), in einer Blickrichtung parallel zu einer Achsrichtung der Kettenräder (1, 2), relativ zu der Längsrichtung des langen Arms (8) unter das Niveau des ersten Anschlagarms (11) des in Bezug dazu vorderen Traggeschirrs (3) abtaucht, um eine Platte (9) von dem ersten (11) auf den zweiten (10) Anschlagarm zu übergeben.

11. Kühlvorrichtung nach einem der Ansprüche 1 bis 8 mit einer Nockenscheibe (12, 12'), die koaxial mit dem einlaufseitigen Kettenrad (1,1') mitläuft und dazu ausgelegt ist, die Platten (9, 9') während des Umlaufs des jeweiligen Traggeschirrs über einen Teilkreis des einlaufseitigen Kettenrades (1, 1') als kettenseitiger Anschlag zu halten.

12. Kühlvorrichtung nach Anspruch 11, bei der die Nockenscheibe (12') radial innerhalb axial durchlaufender Teile der Traggeschirre (3') liegt.

13. Produktionsanlage zur Herstellung von beschichteten Holzwerkstoffplatten (9, 9') mit einer Kühlvorrichtung nach einem der vorstehenden Ansprüche, insbesondere in Kombination mit einer Doppelbandanlage oder einer Kurztakt-Beschichtungspresse.

14. Verfahren zum Herstellen von Platten (9, 9') unter Verwendung einer Kühlvorrichtung nach einem der Ansprüche 1 bis 11 oder einer Produktionsanlage nach Anspruch 12 oder 13, bei dem die Platten (9, 9') aus einer liegenden Einlaufposition mit einem langen Arm (8, 8') eines Traggeschirrs (3, 3') einer Transportkette (4, 4') während des Transports über einen Teilkreis eines einlaufseitigen Kettenrades (1, 1') der Transportkette (4, 4') aufgerichtet und über eine vertikal aufgerichtete Orientierung hinaus übergekippt werden und mit einem oberen Bereich an einem langen Arm (8, 8') eines Traggeschirrs (3, 3') vor dem Traggeschirr (3, 3') des aufrichtenden langen Arms (8, 8') während eines Transports über ein oberes Trum der Transportkette (4, 4') anliegen, wobei sich der lange Arm (8, 8') während des Transports auf dem oberen Trum von der Transportkette (4, 4') weg nach oben erstreckt.

15. Verwendung einer Kühlvorrichtung nach einem der Ansprüche 1 bis 12 für eine Produktionsanlage nach Anspruch 13 oder ein Verfahren nach Anspruch 14.
